# EUROPÄISCHE PATENTSCHRIFT

(11) **EP 1 523 611 B1**
(45) Veröffentlichungstag und Bekanntmachung des Hinweises auf die Patenterteilung: **07.06.2006**
(21) Anmeldenummer: 03783911.5
(22) Anmeldetag: 02.06.2003
(51) Int. Cl.: F01N 3/023, B01D 53/94, F01N 3/20, B01D 53/92, B01D 53/32, F01N 3/029, F01N 3/033, F01N 3/035

(54) **VORRICHTUNG UND VERFAHREN ZUR ABGASREINIGUNG EINER BRENNKRAFTMASCHINE**
DEVICE AND METHOD FOR THE PURIFICATION OF EXHAUST GAS IN AN INTERNAL COMBUSTION ENGINE
DISPOSITIF ET PROCEDE DE PURIFICATION DES GAZ D'ECHAPPEMENT D'UN MOTEUR A COMBUSTION INTERNE

(30) Priorität: 12.07.2002 DE 10231620
(43) Veröffentlichungstag der Anmeldung: 20.04.2005
(73) Patentinhaber: ROBERT BOSCH GMBH, 70442 Stuttgart (DE)
(72) Erfinder: BREUER, Norbert, 71254 Ditzingen (DE); FISCHER, Stefan, 96215 Lichtenfels (DE)
(86) Internationale Anmeldenummer: PCT/DE2003/001805
(87) Internationale Veröffentlichungsnummer: WO 2004/015250

(56) Entgegenhaltungen:
- EP-A- 1 020 620
- EP-A- 1 116 863
- DE-A- 3 440 689
- PATENT ABSTRACTS OF JAPAN vol. 006, no. 098 (C-106), 8. Juni 1982 (1982-06-08) & JP 57 030524 A (TSUCHIYA MFG CO LTD), 18. Februar 1982 (1982-02-18)

## Beschreibung

Die vorliegende Erfindung betrifft ein Verfahren zum Betreiben einer Vorrichtung zur Abgasreinigung einer Brennkraftmaschine. Die verwendete Vorrichtung weist eine von der Brennkraftmaschine wegführende Abgasleitung und eine Ozonquelle zum Anreichern des Abgasstromes mit Ozon auf. Die Erfindung betrifft weiterhin ein Verfahren zum Regenerieren eines Partikelfilters in einer Vorrichtung zur Abgasreinigung. Dabei betrifft die Erfindung vorzugsweise Dieselmotoren, die insbesondere in Kraftfahrzeugen angeordnet sind.

### Stand der Technik

Aus der EP 1 026 373 A2 ist eine Vorrichtung zur Reinigung des Abgasstromes einer Brennkraftmaschine mit einer Ozonquelle bekannt, die der Anreicherung des Abgasstromes mit Ozon dient. Gemäß dieser Veröffentlichung sind in der Abgasleitung ein Oxidationskatalysator und stromabwärts des Oxidationskatalysators ein Partikelfilter angeordnet. Die Zufuhr des Ozons dient der Reinigung des Partikelfilters von dort abgeschiedenen Partikeln während des Betriebes der Brennkraftmaschine. Die Anreicherung des Abgasstromes mit Ozon erfolgt zwischen Oxidationskatalysator und Partikelfilter. Mit dem Abgas gelangt das Ozon dann zum Partikelfilter. Die Partikel reagieren mit dem zugeführten Ozon, da dessen Reaktionsträgheit sehr gering ist, eine Selbstentzündung der Partikel findet auch bei relativ niedrigen Temperaturen des Abgasstromes statt. Die Partikel oxidieren und werden dadurch beseitigt, wodurch der Partikelfilter gereinigt wird.

Weiterhin ist aus der DE 38 34 920 A1 ein Verfahren und eine Vorrichtung zum Beseitigen von in einem Abgasfilter einer Brennkraftmaschine abgeschiedenen Ruß bekannt, wobei Entladeströme erzeugt werden, die zum einen die Rußpartikel aufheizen, zum anderen Ozon erzeugen, das die Rußpartikel oxidiert und somit den Rußabbrand am Filter unterstützt.

Die Erfindung soll den Betrieb einer Abgasreinigungsanlage hinsichtlich des Energieverbrauchs verbessern. Dies kann gemäß der Erfindung einerseits dadurch erfolgen, dass die für die Regeneration eines Partikelfilters benötigte Energie reduziert wird, andererseits durch Minderung des Verbrauchs der Brennkraftmaschine selbst. Auch soll der Schadstoffausstoß einer Brennkraftmaschine verbessert werden.

Vorteile der Erfindung Bei einem erfindungsgemäßen Verfahren zur Reinigung eines Abgasstromes erfolgt eine kontinuierliche Anreicherung des Abgasstromes mit Ozon derart, dass eine Oxidation mit nahezu vollständiger Verbrennung der Partikel im Abgasstrom bereits während des Durchströmens der Abgasleitung erfolgen kann. Dadurch wird es möglich, auf ein Partikelfilter ganz zu verzichen.

Dies verringert den Strömungswiderstand der Abgasleitung und damit den Abgasgegendruck sowie hierdurch den Energieverbrauch der Brennkraftmaschine. Die hohe Oberfläche der Partikel, weit überwiegend Ruß mit einer Primärpartikelgröße von weniger als 100 nm, erleichtert eine Oxidation während der Verweilzeit im Abgasstrang, also der Flugzeit der Gase.

Das Ozon ist ein starkes Oxidationsmittel für die Partikel im Abgasstrom. Durch die Präsenz des Ozons setzt die Oxidation der Partikel bei geringen Temperaturen in der Abgasleitung ein, die auch unterhalb von 150° Celsius liegen können. Die Oxidation der Partikel ist eine exotherme Reaktion, die stattfindet, wenn die Atmosphäre geeignete Reaktionsbedingungen - Präsenz von Sauerstoff in ausreichender Konzentration - und ausreichende Temperatur vorliegt. Das Ozon ist eine metastabile Sauerstoffverbindung, welche unter Energieabgabe nach kurzer Zeit zerfällt. Es werden dabei ungebundene, hoch reaktive Sauerstoffatome (Radikale) freigesetzt, welche die Reaktivität der Atmosphäre erhöhen und damit die Zündtemperatur für die Verbrennung der Partikel erheblich absenkt.

Aufgrund der Metastabilität des Ozons ist es nicht speicherbar, es muss bedarfsgerecht und wenigstens in der Nähe des zu reinigenden Abgasstromes erfolgen. Daher ist eine Ozonquelle vorsehbar, in der Ozon erzeugt wird. Ozon kann in einer sauerstoffhaltigen Atmosphäre durch zur Spaltung von Sauerstoffmolekülen geeignete Energiezufuhr gewonnen werden. Dies kann beispielsweise durch elektromagnetische Wechselfelder oder UV-Licht erfolgen. Eine elektrochemische Ozonerzeugung ist mit Wasser als Edukt möglich. Die Anreicherung des Abgasstromes mit Ozon kann gemäß vorteilhaften Ausgestaltungen der Erfindung zum einen durch Ozonerzeugung im Abgasstrom selbst oder aber durch Ozonerzeugung in einer außerhalb der Abgasleitung angeordneten Ozonquelle erfolgen. Bei der Ozonerzeugung im .. Abgasstrom selbst muss allerdings Sauerstoff in ausreichender Menge im Abgasstrom selbst vorhanden sein. Dies ist entweder im Falle einer mageren Verbrennung des Kraftstoffes in der Brennkraftmaschine oder aber durch Beimengung von Luft in den Abgasstrom erzielbar. Im Falle einer externen Erzeugung des Ozons kann dies in einer Reaktionskammer erfolgen, die von angesaugter Außenluft durchströmt wird.

Die Dosierung des Ozons erfolgt vorzugsweise derart, dass die Temperatur des Abgasstromes bei der durch die Ozonquelle erzeugten Anreicherung mit Ozon oberhalb der Selbstentzündungstemperatur der (Ruß-)Partikel liegt. Die Dosierung des Ozons kann dabei so erfolgen, dass in der Abgasleitung, von der Stelle der Anreicherung mit Ozon stromabwärts beabstandet, ein Partikelsensor vorgesehen ist, der den verbleibenden Partikelgehalt im Abgasstrom misst. Diese Messung kann auch indirekt, beispielsweise über die Erfassung der Abgastemperatur in diesem Bereich der Abgasleitung erfolgen. Die Anreicherung mit Ozon erfolgt so, dass der Partikelgehalt am Partikelsensor einen vorgegebenen Grenzwert unterschreitet. Der vorgegebene Grenzwert wird dabei beispielsweise so bestimmt, dass gesetzlich vorgegebene Abgasgrenzwerte hinsichtlich der Partikel - Ruß - eingehalten oder unterschritten werden. Ergänzend oder alternativ kann es vorgesehen sein, die Temperatur des Abgasstromes vor der Stelle der Anreicherung mit Ozon zu erfassen. Der Temperaturanstieg zwischen dem Temperatursensor vor der Anreicherung mit Ozon und einem Temperatursensor stromabwärts der Anreicherung mit Ozon ist ein Maß für die bei der Verbrennung der Partikel freigewordenen Energie. Wird diese Temperaturdifferenz bei geringst möglicher Anreicherung mit Ozon (Ozongehalt) maximiert, so kann dies als Erreichen eines maximalen Verbrennungsgrad der Partikel gewertet werden.

### Zeichnung

Ausführungsbeispiele der Erfindung sind in der Zeichnung dargestellt und nachfolgend näher erläutert; dabei zeigt:
- Figur 1:: in schematischer Darstellung eine Vorrichtung zur Abgasreinigung mit einer außerhalb der Abgasleitung angeordneten Ozonquelle;
- Figur 2:: in schematischer Darstellung eine Vorrichtung zur Abgasreinigung mit einer innerhalb der Abgasleitung angeordneten Ozonquelle;
- Figur 3:: in schematischer Darstellung eine Abgasreinigungsanlage mit einem Partikelfilter;
- Figur 4:: das Flussdiagramm eines erfindungsgemäßen Verfahrens zur Steuerung der Ozonkonzentration bei kontinuierlicher Anreicherung mit Ozon;
- Figur 5:: das Flussdiagramm eines Verfahrens zum Regenerieren eines Partikelfilters nach dem Ausschalten der Brennkraftmaschine; und
- Figur 6:: das Flussdiagramm eines Verfahrens zum Spülen der Abgasleitung mit ozonangereichertem Gas vor dem Fahrzeugstart.

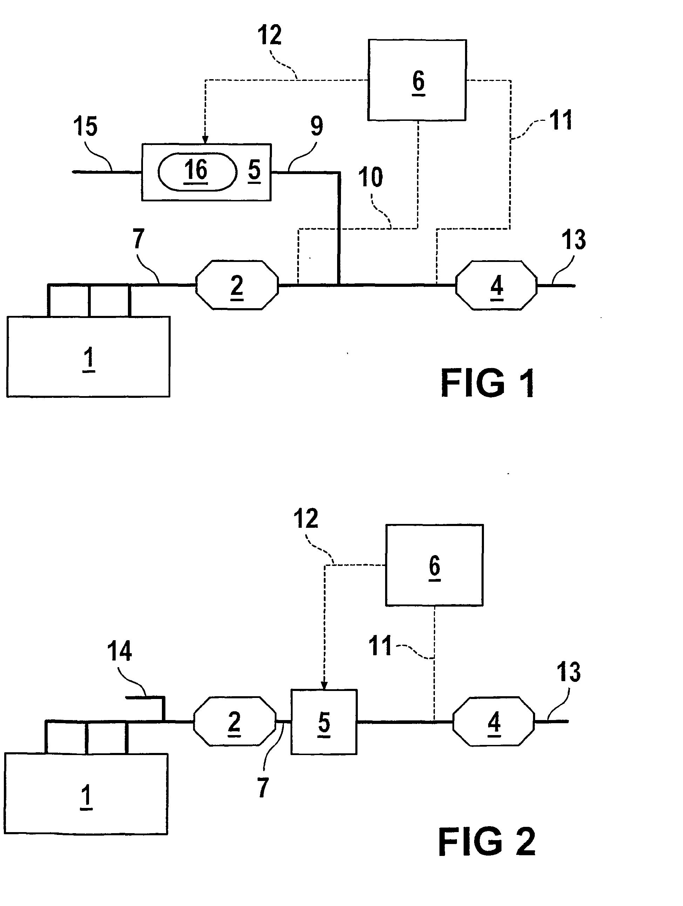

Die Figur 1 zeigt in schematischer Darstellung eine Vorrichtung zur Abgasreinigung mit einer außerhalb der Abgasleitung 7 angeordneten Ozonquelle.

Die Abgasleitung 7 führt dabei von der Brennkraftmaschine 1 zum Endrohr 13 der Abgasleitung 7, bei dem die Abgase die Abgasleitung 7 verlassen. In der Abgasleitung 7 und der Abgasleitung 7 zugeordnet sind diverse Elemente der Abgasreinigung, die zusammen eine Abgasreinigungsanlage bilden. Die Abgasreinigung hat den Zweck die von der Brennkraftmaschine 1 ausgestoßenen Abgase von mitgeführten Schadstoffen weitestgehend, mindestens aber entsprechend gesetzlicher Vorschriften, zu reinigen. Zu den Schadstoffen gehören auch Partikel, zum größten Teil Ruß, die aufgrund unvollständiger Verbrennung in der Brennkraftmaschine entstehen. Die Ruß- oder Partikelbildung ist insbesondere bei Dieselmotoren gegeben. Derartige Partikel haben eine Partikelgröße von weniger als 100 Nanometer (100 nm). Es können neben den in der Zeichnung dargestellten Elemente an geeigneter Stelle auch weitere Elemente zur Abgaskonditionierung vorgesehen sein.

In Strömungsrichtung der Abgase gesehen ist in der Abgasleitung 7 zunächst ein Oxidationskatalysator angeordnet, innerhalb dessen beispielsweise nicht vollständig erfolgte Oxidationsreaktionen von Kohlenwasserstoffen und NOₓ zu CO₂ und NO₂ in Präsenz eines Katalysators erfolgen. Partikel durchströmen einen solchen Oxidationskatalysator ohne zu oxidieren.

Im weiteren Verlauf der Abgasleitung ist ein Temperatursensor angeordnet, der über die Signalleitung 10 die Abgastemperatur in diesem Punkt erfasst und an das Steuergerät 6 übermittelt. Hinter dem Temperatursensor mündet die Zufuhrleitung 9 in die Abgasleitung. Über die Zufuhrleitung 9 wird ein ozonhaltiger Gasstrom in den Abgasstrom eingeleitet, der hierdurch mit Ozon angereichert wird. Durch die Anreicherung mit Ozon erfolgt eine Verbrennung der Partikel, die im wesentlichen während der Zurücklegens der Flugstrecke zu dem Endschalldämpfer 4 erfolgt. Die Verbrennung startet aufgrund der Temperatur in der Abgasleitung und der Ozonkonzentration durch Selbstentzündung. Die während der Verbrennung freigegebene Energie erwärmt die Abgase, wobei die Abgastemperatur nach der Reaktionsstrecke vor Eintritt in den Endschalldämpfer 4 nochmals erfasst und über eine Signalleitung 11 der Steuerung 6 der Ozonquelle 5 zugeführt wird.

Nach dem Durchströmen des Endschalldämpfers 4 und des Endrohres 13 der Abgasleitung verlassen die Abgase die Abgasanlage. Sie sind gereinigt und, auch ohne dass in der Abgasanlage ein Partikelfilter angeordnet wäre, hinreichend partikelfrei.

Über die Zufuhrleitung 9 erfolgt die kontinuierliche Zufuhr eines mit Ozon angereicherten Gasstromes. Die Ozonerzeugung bzw. das Anreichern eines Eduktes mit Ozon erfolgt durch den Ozongenerator 5. Diesem Ozongenerator 5 wird über die Ansaugleitung 15 ein Edukt, beispielsweise Luft zugeführt. In der Reaktionskammer 16 wird im Edukt Ozon erzeugt, wodurch das Produkt, ein mit Ozon angereichertes Gas, entsteht. Ein kontinuierlicher Produktgasstrom gelangt in die Abgasleitung.

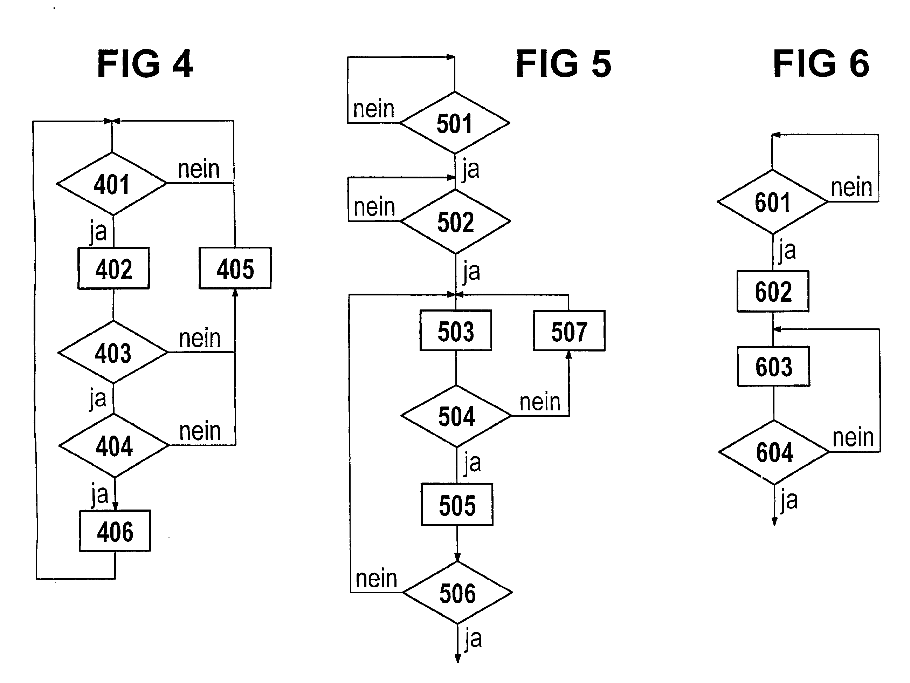

Dabei wird die Ozonerzeugung der Ozonquelle durch das Steuergerät 6 gesteuert, beispielsweise gemäß einem in Fig. 4 dargestellten Verfahrens. Es sind unterschiedliche Reaktionskammern 16 bzw. Ozonerzeugungsformen denkbar. Die Erzeugung des Ozons kann in bekannter Weise durch Plasmaerzeugung, UV-Bestrahlung oder elektrochemisch erfolgen. Gewöhnlich enthält der so erzeugte ozonhaltige Gasstrom eine Ozonkonzentration von 10 bis 30%. Als Edukt kann Sauerstoff, Luftsauerstoff oder auch Wasser (elektrochemische Verfahren) dienen. Die Dosierung des ozonhaltigen Gasstromes bzw. die Dosierung der Ozonerzeugung kann durch Regelung des Eduktstromes, der Erzeugerleistung oder des Produktstromes (ozonhaltiger Gasstrom in der Zufuhrleitung 9) geregelt werden. Die Regelung durch das Steuergerät kann dabei insbesondere in Abhängigkeit von Kennfelddaten des Motors, Temperatursensoren und Partikelsensoren erfolgen. So ist es möglich, mit dem Einstellen eines ungünstigen, zu hoher Partikelbildung führenden Betriebszustandes zugleich die Ozonanreicherung im Abgasstrom zu erhöhen.

Die Vorrichtung gemäß Figur 2 unterscheidet sich hinsichtlich der Anordnung des Ozongenerators von der Ausführungsform der Figur 1. Die Ozonquelle 5 ist im Bereich der Abgasleitung 7 angeordnet und ihre Reaktionskammer befindet sich innerhalb der Abgasleitung 7 selbst. Das Ozon wird im wesentlichen aus im Abgasstrom enthaltenem Sauerstoff gebildet. Im Abgasstrom ist dann Sauerstoff enthalten, wenn die Brennkraftmaschine 1 mit magerer Gemischaufbereitung betrieben wird. Alternativ oder zusätzlich kann auch eine Bypass-Leitung 14 vorgesehen sein, die Luft aus dem Ansaugtrakt der Brennkraftmaschine an den Brennkammern vorbei in die Abgasleitung 7 einleitet. Das Einleiten der Luft kann dabei bereits stromaufwärts eines vor der Ozonquelle 5 angeordneten Oxidationskatalysators 2 erfolgen.

Alternativ zur Vorrichtung gemäß Figur 1 ist in Figur 2 der Temperatursensor stromaufwärts der Ozonquelle entfallen, da anstelle eines weiteren Temperatursensors vor dem Endschalldämpfer 4 ein Partikelsensor angeordnet ist, der den Partikelgehalt des Abgasstromes erfasst und dessen Messwerte über die Signalleitung 11 an das Steuergerät 6 übermittelt, das wiederum über die Steuerleitung 12 den Betreib der Ozonquelle 5 so beeinflusst, dass der Partikelgehalt beim Partikelsensor einen vorgegebenen Wert nicht überschreitet.

Die Ozonerzeugung selbst bzw. deren Regelung über das Steuergerät 6 kann im übrigen in den bezüglich Figur 1 und Figur 6 beschriebenen Weisen erfolgen.

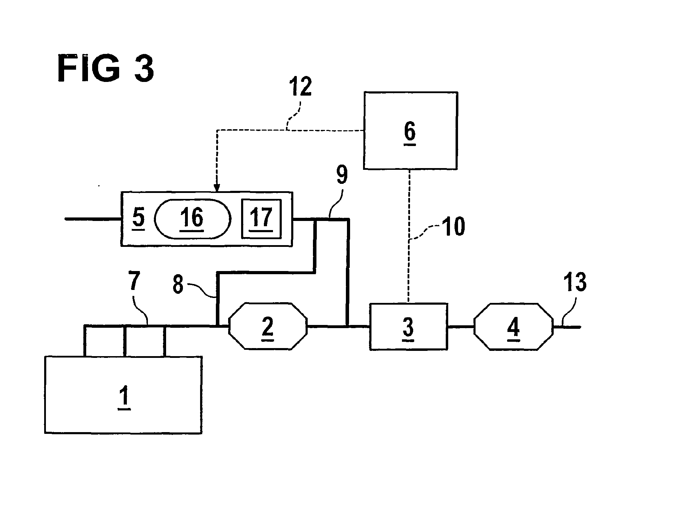

Die Figur 3 zeigt in schematischer Darstellung eine Abgasreinigungsanlage mit einer außerhalb der Abgasleitung 7 angeordneten Ozonquelle 5, wobei ein Partikelfilter 3 in der Abgasleitung 7 angeordnet ist.

Die Abgasleitung 7 führt dabei von der Brennkraftmaschine 1 zum Endrohr 13 der Abgasleitung 7, bei dem die Abgase die Abgasleitung 7 verlassen. In der Abgasleitung 7 und der Abgasleitung 7 zugeordnet sind diverse Elemente der Abgasreinigung, die zusammen eine Abgasreinigungsanlage bilden. Die Abgasreinigung hat den Zweck, die von der Brennkraftmaschine 1 ausgestoßenen Abgase von mitgeführten Schadstoffen weitestgehend, mindestens aber entsprechend gesetzlicher Vorschriften, zu reinigen. Zu den Schadstoffen gehören auch Partikel, meist Ruß, die aufgrund unvollständiger Verbrennung in der Brennkraftmaschine entstehen. Die Ruß- oder Partikelbildung ist insbesondere bei Dieselmotoren gegeben. Derartige Partikel haben eine Partikelgröße von weniger als 100 Nanometer (100 nm).

In Strömungsrichtung der Abgase gesehen ist in der Abgasleitung 7 zunächst ein Oxidationskatalysator angeordnet, innerhalb dessen beispielsweise nicht vollständig erfolgte Oxidationsreaktion von Kohlenwasserstoffen und NOₓ zu CO₂ und NO₂ in Präsenz eines Katalysators erfolgen. Rußpartikel durchströmen einen solchen Oxidationskatalysator bei den relevanten Temperaturen von z. B. < 280°C ohne zu oxidieren.

Sowohl vor als auch hinter dem Oxidationskatalysators 2 ist eine Zufuhrleitung 8 bzw. 9 zur intermittierenden Zufuhr von ozonhaltigem Gas in die Abgasleitung 7 angeordnet. Stromabwärts der Zufuhrleitung 9 ist ein Partikelfilter 3 angeordnet, der von dem Abgas durchströmt wird. Im Abgasstrom enthaltene Partikel werden vom Partikelfilter zurückgehalten. An oder nach dem Partikelfilter kann die Abgastemperatur erfasst und über eine Signalleitung 11 der Steuerung 6 der Ozonquelle 5 zugeführt werden. Nach dem Durchströmen des Endschalldämpfers 4 und des Endrohres 13 der Abgasleitung verlassen die Abgase die Abgasanlage.

Damit der Partikelfilter 3 nicht durch die abgeschiedenen Partikel zugesetzt wird, muss er immer wieder durch Verbrennen der abgeschiedenen Partikel regeneriert werden. Über die Zufuhrleitung 9 kann ein ozonhaltiger Gasstrom in die Abgasleitung 7 eingeleitet werden, wodurch eine Regeneration des stromabwärts in der Abgasleitung 7 angeordneten Partikelfilters 3 erfolgt. Durch die Anreicherung mit Ozon erfolgt eine Verbrennung der im Partikelfilter 3 zurückgehaltenen Partikel, so dass der Filter von den gebildeten Ablagerungen befreit, also regeneriert wird. Ein mögliches Verfahren zur Regeneration eines Partikelfilters ist in der Fig. 5 dargestellt, wobei die Regeneration unmittelbar nach dem Abschalten der Brennkraftmaschine 1 erfolgt, also wenn kein weiterer Abgasstrom vorhanden ist. Dies erlaubt es, die Anlage mit einer Ozonquelle relativ geringer Leistung auszustatten, ohne ihre Funktionsfähigkeit zu beeinträchtigen.

Die Verbrennung im Partikelfilter startet aufgrund der Temperatur in der Abgasleitung 7 und der erzeugten Ozonkonzentration durch Selbstentzündung. Die während der Verbrennung freigegebene Energie erwärmt die Verbrennungsgase, wodurch sich die Temperatur im Partikelfilter erhöht. Die für die Selbstzündung erforderliche Temperatur wird im Prozess aufrechterhalten.

Über die Zufuhrleitung 9 erfolgt die Zufuhr eines mit Ozon angereicherten Gasstromes, wobei die Strömung des Gasstromes über das Gebläse 17 erzeugbar ist, das Teil des Ozongenerators 5 ist. Die Ozonerzeugung bzw. das Anreichern eines Ausgangsgases mit Ozon erfolgt über den Ozongenerator 5. Diesem Ozongenerator 5 wird über die Ansaugleitung 15 Edukt, beispielsweise Luft zugeführt. In der Reaktionskammer 16 wird im Edukt Ozon erzeugt, wodurch das Produkt, ein mit Ozon angereichertes Gas, entsteht. Ein Produktgasstrom gelangt in die Abgasleitung. Dabei wird die Ozonerzeugung der Ozonquelle durch das Steuergerät 6 gesteuert, beispielsweise gemäß einem in Fig. 5 dargestellten Verfahrens. Es sind unterschiedliche Reaktionskammern 16 bzw. Ozonerzeugungsformen denkbar. Die Erzeugung des Ozons kann in bekannter Weise durch Plasmaerzeugung, UV-Bestrahlung oder elektrochemisch erfolgen. Gewöhnlich enthält der so erzeugte ozonhaltige Gasstrom eine Ozonkonzentration von 1 bis 20%. Als Edukt kann Sauerstoff, Luftsauerstoff oder auch Wasser (elektrochemische Verfahren) dienen. Die Dosierung des ozonhaltigen Gasstromes bzw. die Dosierung der Ozonerzeugung kann durch Regelung des Eduktstromes, der Erzeugerleistung oder des Produktstromes (ozonhaltiger Gasstrom in der Zufuhrleitung 9) geregelt werden.

Darüber hinaus ist es auch möglich, über die Zufuhrleitung 8 vor dem Starten der Brennkraftmaschine die Abgasleitung 7 mit ozonhaltigem Gas zu spülen. Hierzu wird ozonhaltiges Gas von der Gasquelle 5 erzeugt und durch die Zufuhrleitung 8 in die Abgasleitung 7 geleitet. Das Gas strömt durch den Oxidationskatalysator 2 hindurch bis zum Endrohr 13. Spätestens dann, wenn nach dem Start zusätzlich warme Abgase von der Brennkraftmaschine in der Abgasleitung strömen, werden in der Abgasleitung 7 angelagerte Kohlenwasserstoffe aufgrund der Präsenz des Ozons verbrannt. Spätestens kurz nach Motorstart kann die Erzeugung von ozonhaltigem Gas beendet werden. Ein entsprechendes Verfahren, bei dem auch gleichzeitig über das zugeführte Ozon ein rasches Erwärmen des Katalysators 2 erfolgen kann, ist in der Figur 6 beschrieben.

Eine Zufuhrleitung 8 zur Spülung des Abgasstranges kann auch in der Ausführungsform der Figur 1 in gleicher Weise vorgesehen sein und dementsprechend kann dann auch ein Verfahren gemäß der Figur 6 durchgeführt werden.

Die Fig. 4 zeigt ein Verfahren zur Durchführung einer Abgasreinigung mit kontinuierlicher Anreicherung von Ozon im Abgasstrom, wie es durchgeführt wird, wenn die Abgasleitung 7 partikelfilterfrei ist. Im Schritt 401 wird überprüft, ob die Brennkraftmaschine in Betrieb ist, da dies Voraussetzung für das vorliegende Verfahren ist. Solange dies nicht der Fall ist, werden keine weiteren Verfahrensschritte durchgeführt. Sobald in Schritt 401 festgestellt wird, dass die Brennkraftmaschine in Betrieb ist, wird gemäß dem Schritt 402 der Abgasstrom in der zuvor erfolgten Menge oder Konzentration mit Ozon angereichert, wobei es unerheblich ist, ob das Ozon in der Abgasleitung selbst oder in einer externen Ozonquelle erzeugt und über eine Zufuhrleitung 9 zugeführt wird.

Gemäß dem Schritt 403 wird dann überprüft, ob die Abgastemperatur stromabwärts der Anreicherung mit Ozon höher ist als stromaufwärts davon. Dies ist dann der Fall, wenn eine Selbstzündung erfolgt ist und während der Flugstrecke der Abgase nach dem Erzeugen der Ozonkonzentration bis zum Erreichen des stromabwärtsliegenden Temperatursensors eine Verbrennung von Partikeln stattgefunden hat. Ist dies nicht der Fall, so wird zum Schritt 405 gesprungen und die zu erzeugende Ozonkonzentration erhöht, wobei die Erhöhung um einen Schritt vorgegebener Größe, beispielsweise 0,5 % erfolgen kann.
Über das Steuergerät 6 wird die Ozonquelle 5 entsprechend der Erzeugung der höheren Ozonkonzentration angesteuert.

Im Schritt 404 wird überprüft, ob die Temperatur am stromabwärtsliegenden Messpunkt maximal ist, das heißt ob sie bei einer weiteren Erhöhung der Ozonkonzentration weiter zunimmt. Dazu wird die Temperatur mit der dort gemessenen Temperatur bei der vorhergehenden Abfrage verglichen. Ist die aktuelle Temperatur größer als die vorhergehende und hat zuletzt eine Erhöhung der Ozonkonzentration stattgefunden, so konnte die Verbrennung von Partikeln durch Erhöhen der Ozonkonzentration gesteigert werden. Es wird dann zu Schritt 405 gesprungen und die Ozonkonzentration um einen weiteren Schritt erhöht. Es wird auch dann zu Schritt 405 gesprungen, wenn die aktuelle Temperatur geringer ist als die vorhergehende und zuletzt eine Verringerung der Ozonkonzentration gemäß Schritt 406 stattgefunden hat.

Andernfalls hat die letzte Erhöhung oder letzte Verringerung der Ozonkonzentration in der Abgasleitung nicht zu einer gesteigerten bzw. verringerten Verbrennung von Partikeln geführt, die Verbrennung erfolgte bisher schon bzw. erfolgt weiterhin vollständig. Im Sinne einer Reduzierung des Energieverbrauchs zur Erzeugung des Ozons wird daher im Schritt 406 die Ozonkonzentration um einen Schritt verringert.

Die Figur 5 zeigt ein Verfahren zur Regeneration eines Partikelfilters 3, das nach dem Abstellen der Brennkraftmaschine durchgeführt wird. Eine entsprechende Abgasreinigungsanlage mit einem Partikelfilter 3 ist in Figur 3 dargestellt und dort beschrieben. Gemäß dem Schritt 501 wird überprüft, ob die Brennkraftmaschine abgestellt wurde. Ist dies nicht der Fall, so wird zum Schritt 501 zurückgesprungen. Sobald im Schritt 501 festgestellt wird, dass die Brennkraftmaschine abgestellt wurde, wird gemäß dem Schritt 502 überprüft, ob sich die Temperatur des Partikelfilters auf ein gewünschtes Maß, das oberhalb der Selbstentzündungstemperatur der abgelagerten Partikel bei erreichbarer Ozonkonzentration liegt, abgesunken ist. Sobald dies geschehen ist, wird gemäß Schritt 503 Ozon in den Partikelfilter eingeleitet.

Das Einbringen des Ozons, möglicherweise in Verbindung mit einem Trägergas, kann beispielsweise mittels eines Gebläses erfolgen.

Anschließend wird gemäß Schritt 504 überprüft, ob die Temperatur oberhalb eines vorgesehenen Grenzwertes liegt. Ist dies der Fall, so wird zum Schritt 507 zurückgesprungen und die einzuleitende Ozonkonzentration um einen vorgegebenen Schritt, beispielsweise um 0,5 %, reduziert und dann zum Schritt 503 gesprungen.

Andernfalls wird gemäß dem Schritt 505 die zu erzeugende Ozonkonzentration um einen Schritt erhöht. Danach wird gemäß dem Schritt 506 über einen Sensor überprüft, ob die abgelagerten Partikel vollständig verbrannt wurden. Dies kann beispielsweise aus dem Verlauf der Temperaturkurve in Abhängigkeit der Ozonkonzentration oder aber mittels einem Differenzdrucksensor, der die Druckdifferenz über den Partikelsensor erfasst geschehen. Ist die Verbrennung der abgelagerten Partikel noch nicht vollständig erfolgt, so wird zum Schritt 503 gesprungen. Andernfalls wird die Ozonerzeugung und Einleitung von ozonhaltigem Gas in den Partikelfilter beendet. Das Verfahren ist beendet.

Der Vorteil der Durchführung einer Regeneration eines Partikelfilters bei ausgeschalteter Brennkraftmaschine besteht darin, dass die Ozonkonzentration mit geringem Energieaufwand innerhalb des Partikelfilters sehr hoch gehalten werden kann, da keine Verdünnung mit dem Motorabgas auftritt. Außerdem führt ohne zusätzlichen Abgasstrom die exotherme Oxidation der Partikel zu einem deutlichen Anstieg der Filtertemperatur, da der konvektive Wärmeabtransport auf Grund des geringeren Massenstroms wesentlich verringert ist. Beide Effekte führen zu einer deutlich verringerten Regenerationszeit und einem geringeren Energieaufwand. Ist ausschließlich eine solche Regeneration des Partikelfilters vorgesehen, also erfolgt keine periodische Regeneration während des Fahrbetriebes, so kann der Ozongenerator kleiner dimensioniert und damit kostengünstiger realisiert werden.

Dabei erfolgt das Einleiten des Ozons vorzugsweise bei einer Resttemperatur des Partikelfilters, die eine Selbstzündung der Partikel bei erreichbarer Ozonkonzentration ermöglicht. Vorzugsweise kann das Abbrennen der Partikel im Partikelfilter mittels eines Temperatursensors überwacht werden. Es ist dabei insbesondere möglich, die Ozonzufuhr so zu steuern, dass die Temperatur des Partikelfilters ein gewisses Maß oberhalb einer Mindesttemperatur liegt, die Mindesttemperatur kann beispielsweise ca. 150 °C betragen. Bei abfallender Tendenz der Temperatur des Partikelfilters wird die Ozonzufuhr erhöht um die stattfindende Verbrennung zu fördern; bei zu weit ansteigender Temperatur wird die Ozonzufuhr verringert um Beschädigungen des Partikelfilters vorzubeugen. Auf diese Weise kann ein gleichmäßiges Abbrennen der Partikel erreicht werden.

Figur 6 zeigt die schematische Darstellung eines Verfahrens zur Spülung der Abgasleitung und eines Oxidationskatalysators mit ozonhaltigem Gas vor Start einer Brennkraftmaschine. In dem Schritt 601 wird überprüft, ob die Brennkraftmaschine gestartet werden soll. Dies erfolgt beispielsweise bei einem Dieselmotor indem abgefragt wird, ob ein Vorglühvorgang eingeleitet wird. Wenn dies der Fall ist, wird gemäß dem Schritt 602 die Abgasleitung durch Zufuhr eines ozonhaltigen Gasstromes, beispielsweise durch eine Zufuhrleitung 8, die stromaufwärts des Oxidationskatalysators 2 mündet - dargestellt in Figur 3, in gleicher Weise auch in einer Vorrichtung ohne Partikelfilter wie gemäß Figur 1 realisierbar - gespült. Das Spülen kann insbesondere für eine vorgegebene Zeitdauer erfolgen. Um die vorzugebende Zeitdauer möglichst gering zu halten, muss durch den Ozongenerator kurzzeitig ein möglichst hoher Volumenstrom mit großer Ozonkonzentration erzeugt werden. Während des Spülvorganges kann deswegen das Starten des Motors gesperrt werden, es wird in diesem Fall erst mit Abschluss des Spülvorganges freigegeben. Dann wird zum Schritt 603 übergegangen. Gemäß dem Schritt 603 wird weiterhin durch die Zufuhrleitung 8 vor dem Oxidationskatalysator 2 ozonhaltiges Gas in die Abgasleitung 7 eingeleitet, wobei die Verbrennung der Brennkraftmaschine so gesteuert ist, dass die Abgase noch verbrennbare Kohlenwasserstoffe enthalten. Dies kann durch eine sehr späte Kraftstoffeinspritzung oder durch eine fette Gemischaufbereitung in der Brennkraftmaschine erfolgen. Sowohl die Ozonzufuhr (Konzentration, Volumenstrom) als auch der Gehalt an Kohlenwasserstoffen kann mit steigender Temperatur im Oxidationskatalysator 2 degressiv erfolgen. Gemäß Schritt 604 wird überprüft, ob der Oxidationskatalysator seine Betriebstemperatur erreicht hat. Ist dies nicht der Fall, so wird zu Schritt 603 gesprungen. Andernfalls wird die Einleitung von ozonhaltigem Gas in die Abgasleitung 7 vor dem Oxidationskatalysator 2 ebenso wie das Verfahren beendet.

Es ist bekannt, dass sich im Abgasstrang nach dem Abschalten des Motors eine gewisse Menge Kohlenwasserstoff an den inneren Oberflächen der Abgasleitung niederschlagen kann. Diese Kohlenwasserstoffe können auf Grund des noch kalten, ineffektiven Oxidationskatalysators beim Anlassen der Brennkraftmaschine entweichen. Diese Startemission lässt sich vermeiden, wenn der Abgasstrang vor dem Startvorgang, beispielsweise während der Vorglühphase eines Dieselmotors, mit einem ozonhaltigen Gasstrom gespült wird. Es findet eine Verbrennung der Kohlenwasserstoffe aufgrund der Präsenz des Ozons statt, die nicht nur die Kohlenwasserstoffe beseitigt, sondern auch rasch die Temperatur in der Abgasleitung erhöht.

Es kann insbesondere vorgesehen sein, den mit Ozon angereicherten Gasstrom stromaufwärts eines Oxidationskatalysators einzuleiten. Dies fördert das Erreichen der Betriebstemperatur, des Oxidationskatalysators nach dem Kaltstart. Darüber hinaus kann bei gleichzeitiger fetter Verbrennung in der Brennkraftmaschine der Abgasstrom zunächst weitere unverbrannte Kohlenwasserstoffe mitführen, die aufgrund der Präsenz des Ozons exotherm verbrannt werden. Auch diese Maßnahme ist einem raschen Erreichen der Betriebstemperatur des Oxidationskatalysators förderlich. Ebenso ist eine Späteinstellung der Einspritzung des Kraftstoffes in die Brennkammern der Brennkraftmaschine hierzu vorteilhaft. Mit steigender Temperatur im Abgasstrang kann die Zufuhr eines mit Ozon angereicherten Gasstromes bzw. die Ozonkonzentration verringert werden.

## Patentansprüche

1. Verfahren zum Reinigen des Abgasstromes in der Abgasleitung (7) einer Brennkraftmaschine(1), insbesondere eines Dieselmotors, von Partikeln, wie Ruß, wobei der Abgasstrom mit Ozon angereichtert. wird, **dadurch gekennzeichnet, dass** eine kontinuierliche Anreicherung des Abgasstromes mit Ozon erfolgt, dass stromabwärts der Anreicherung eine Messung der Temperatur des Abgases oder eine Messung des Partikelgehalts des Abgases erfolgt, dass infolge der Anreicherung vorhandene Partikel bereits während des Durchströmens der Abgasleitung (7) zum großen Teil oxidiert werden können, wobei die Konzentration des Ozons in Abhängigkeit von der Temperatur bzw. des Partikelgehalts des Abgases so gewählt wird, dass der verbleibende Partikelgehalt des Abgasstromes einen vorgegebenen Grenzwert nicht übersteigt.

2. Verfahren nach Anspruch 1, **dadurch gekennzeichnet, dass** zur Ozonanreicherung im Abgasstrom vorhandener Sauerstoff und/oder Wasser verwendet wird.

3. Verfahren nach Anspruch 1, **dadurch gekennzeichnet, dass** das Erzeugen des Ozons in einer Reaktionskammer (16) außerhalb des Abgasstromes erfolgt.

4. Verfahren nach Anspruch 1,
**dadurch gekennzeichnet,**
**dass** nach dem Ausschalten der Brennkraftmaschine (1) in einer Ozonquelle (5) Ozon erzeugt und in die Abgasleitung (7) im Bereich eines in der Abgasleitung (7) angeordneten Partikelfilters (3) eingeleitet wird, so dass der Partikelfilter regeneriert werden kann.

5. Verfahren nach Anspruch 4, **dadurch gekennzeichnet, dass** die Ozonkonzentration an oder in dem Partikelfilter (3) bis zur Selbstentzündung der abgelagerten Partikel erhöht wird.

6. Verfahren nach Anspruch 4 oder 5, **dadurch gekennzeichnet, dass** mittels eines Gebläses (17) eine ozonangereicherte Gasströmung durch den Partikelfilter (3) erzeugt wird.

7. Verfahren nach einem der Ansprüche 4 bis 6, **dadurch gekennzeichnet, dass** die Ozonzufuhr anhand der Temperatur des Partikelfilters (3) geregelt wird.

8. Verfahren nach Anspruch 1, **dadurch gekennzeichnet, daß** in einer Ozonquelle (5) ein mit Ozon angereicherter Gasstrom erzeugt wird und dass die Abgasleitung (7) vor dem Starten der Brennkraftmaschine (1) wenigstens teilweise mit dem mit Ozon angereicherten Gas gespült wird.

9. Verfahren nach Anspruch 8, **dadurch gekennzeichnet, dass** der Gasstrom stromaufwärts eines Oxidationskatalysators (2) in die Abgasleitung (7) eingeleitet wird, wobei zumindest der Oxidationskatalysator (2) vor dem Starten der Brennkraftmaschine (1) mit dem mit Ozon angereicherten Gas gespült wird.

10. Verfahren nach Anspruch 9, **dadurch gekennzeichnet, dass** unmittelbar nach dem Starten der Brennkraftmaschine (1) die Verbrennung in der Brennkraftmaschine derart gesteuert wird, dass die Abgase noch brennbare Kohlenwasserstoffe enthalten.

11. Verfahren nach einem der Ansprüche 9 oder 10, **dadurch gekennzeichnet, dass** bis zum Erreichen der Betriebstemperatur des Oxidationskatalysators (2) eine insbesondere degressive Anreicherung des Abgasstromes mit durch die Ozonquelle (5) erzeugtem Ozon erfolgt.

12. Verfahren nach einem der Ansprüche 8 bis 11 bei Dieselmotoren, **dadurch gekennzeichnet, dass** das Spülen mit Ozon angereichertem Gas während des Vorglühens des Dieselmotors erfolgt.

13. Kraftfahrzeug mit einer Brennkraftmaschine, insbesondere einem Dieselmotor, mit einer Steuereinrichtung (6) zum Steuern wenigstens des Verbrennungsvorganges der Brennkraftmaschine (1) mit einer Recheneinrichtung, insbesondere einem Mikroprozessor, zur Durchführung eines Verfahrens nach einem der Ansprüche 1 bis 12.

## Claims

1. Method for purifying the exhaust-gas stream in the exhaust pipe (7) of an internal combustion engine (1), in particular a diesel engine, by removing particulates, such as soot, in which the exhaust-gas stream is enriched with ozone, **characterized in that** the exhaust-gas stream is continuously enriched with ozone, **in that** the temperature of the exhaust gas or the particulates content of the exhaust gas is measured downstream of the enriching, **in that** as a result of the enriching particulates that are present can mostly be oxidized even as they are flowing through the exhaust pipe (7), the concentration of the ozone being selected in such a way, as a function of the temperature and/or the particulates content of the exhaust gas, that the remaining particulates content of the exhaust-gas stream does not exceed a predetermined limit value.

2. Method according to Claim 1, **characterized in that** water and/or oxygen which is present in the exhaust-gas stream is used for the ozone enriching.

3. Method according to Claim 1, **characterized in that** the generation of the ozone takes place in a reaction chamber (16) outside the exhaust-gas stream.

4. Method according to Claim 1, **characterized in that** after the internal combustion engine (1) has been switched off, ozone is generated in an ozone source (5) and is introduced into the exhaust pipe (7) in the region of a particulate filter (3) arranged in the exhaust pipe (7), so that the particulate filter can be regenerated.

5. Method according to Claim 4, **characterized in that** the ozone concentration at or in the particulate filter (3) is increased until the accumulated particulates spontaneously ignite.

6. Method according to Claim 4 or 5, **characterized in that** an ozone-enriched gas flow through the particulate filter (3) is generated by means of a fan (17).

7. Method according to one of Claims 4 to 6, **characterized in that** the ozone supply is controlled on the basis of the temperature of the particulate filter (3).

8. Method according to Claim 1, **characterized in that** an ozone-enriched gas stream is generated in an ozone source (5), and **in that** the exhaust pipe (7) is at least partially flushed with the ozone-enriched gas before the internal combustion engine (1) is started up.

9. Method according to Claim 8, **characterized in that** the gas stream is introduced into the exhaust pipe (7) upstream of an oxidation catalytic converter (2), at least the oxidation catalytic converter (2) being flushed with the ozone-enriched gas before the internal combustion engine (1) is started up.

10. Method according to Claim 9, **characterized in that** immediately after the internal combustion engine (1) has started up, the combustion in the internal combustion engine is controlled in such a manner that the exhaust gases contain hydrocarbons which are still combustible.

11. Method according to either of Claims 9 and 10, **characterized in that** until the operating temperature of the oxidation catalytic converter (2) is reached, in particular degressive enriching of the exhaust-gas stream with ozone generated by the ozone source (5) takes place.

12. Method according to one of Claims 8 to 11 for diesel engines, **characterized in that** the flushing with ozone-enriched gas takes place during the preheating of the diesel engine.

13. Motor vehicle having an internal combustion engine, in particular a diesel engine, having a control device (6) for controlling at least the combustion operation of the internal combustion engine (1) with a computer device, in particular a microprocessor, for carrying out a method according to one of Claims 1 to 12.

## Revendications

1. Procédé de purification du courant de gaz d'échappement dans la conduite de gaz d'échappement (7) d'un moteur à combustion interne (1), en particulier d'un moteur diesel, par épuration des particules comme la suie, selon lequel on enrichit le courant de gaz d'échappement en ozone,
**caractérisé en ce qu'**
on effectue un enrichissement continu du courant de gaz d'échappement en ozone, on effectue une mesure de la température des gaz d'échappement ou une mesure de la teneur en particules des gaz d'échappement en aval de l'enrichissement, des particules présentes peuvent déjà être en grande partie oxydées pendant l'écoulement dans la conduite de gaz d'échappement (7) par suite de l'enrichissement, et on choisit la concentration en ozone en fonction de la température ou de la teneur en particules des gaz d'échappement, de telle manière que la teneur en particules subsistant dans le courant de gaz d'échappement ne dépasse pas une valeur limite prédéterminée.

2. Procédé selon la revendication 1,
**caractérisé en ce que**
pour l'enrichissement en ozone, on utilise de l'oxygène présent dans le courant de gaz d'échappement et/ou de l'eau

3. Procédé selon la revendication 1,
**caractérisé en ce qu'**
on réalise la production d'ozone dans une chambre de réaction (16) à l'extérieur du courant de gaz d'échappement.

4. Procédé selon la revendication 1,
**caractérisé en ce qu'**
on produit de l'ozone dans une source d'ozone (5) après l'arrêt du moteur à combustion interne (1) et on l'introduit dans la conduite de gaz d'échappement (7) dans la zone d'un filtre à particules (3) disposé dans la conduite de gaz d'échappement (7), de telle manière que le filtre à particules puisse être régénéré.

5. Procédé selon la revendication 4,
**caractérisé en ce qu'**
on augmente la concentration en ozone sur ou dans le filtre à particules (3) jusqu'à l'inflammation spontanée des particules déposées.

6. Procédé selon la revendication 4 ou 5,
**caractérisé en ce qu'**
on produit un courant de gaz enrichi en ozone à travers le filtre à particules (3) au moyen d'une soufflante (17).

7. Procédé selon l'une quelconque des revendications 4 à 6,
**caractérisé en ce qu'**
on régule l'apport d'ozone à l'aide de la température du filtre à particules (3).

8. Procédé selon la revendication 7,
**caractérisé en ce qu'**
on produit un courant de gaz enrichi en ozone dans une source d'ozone (5), et on purge la conduite de gaz d'échappement (7) au moins partiellement avec le gaz enrichi en ozone avant le démarrage du moteur à combustion interne (1).

9. Procédé selon la revendication 8,
**caractérisé en ce qu'**
on introduit le courant de gaz dans le conduit de gaz d'échappement (7) en amont d'un catalyseur d'oxydation (2), en purgeant au moins le catalyseur d'oxydation (2) avec le gaz enrichi en ozone avant le démarrage du moteur à combustion interne (1).

10. Procédé selon la revendication 9,
**caractérisé en ce qu'**
on règle la combustion dans le moteur à combustion interne immédiatement après le démarrage du moteur à combustion interne (1), de telle manière que les gaz d'échappement contiennent encore des hydrocarbures combustibles.

11. Procédé selon l'une quelconque des revendications 9 ou 10,
**caractérisé en ce qu'**
on effectue un enrichissement en particulier dégressif du courant de gaz d'échappement avec l'ozone produit par la source d'ozone (5) jusqu'à ce que la température de régime du catalyseur d'oxydation (2) soit atteinte.

12. Procédé selon l'une quelconque des revendications 8 à 11 dans des moteurs diesel,
**caractérisé en ce qu'**
on effectue la purge avec du gaz enrichi en ozone pendant le préchauffage du moteur diesel.

13. Véhicule automobile avec un moteur à combustion interne, en particulier un moteur diesel, comportant un dispositif de commande (6) pour régler au moins le processus de combustion du moteur à combustion interne (1) avec un dispositif de calcul, en particulier un microprocesseur, pour la mise en oeuvre d'un procédé selon l'une quelconque des revendications 1 à 12.
